# FASCICULE DE BREVET EUROPEEN

(11) **EP 0 795 389 B1**
(45) Date de publication et mention de la délivrance du brevet: **03.07.2002**
(21) Numéro de dépôt: 97870035.9
(22) Date de dépôt: 12.03.1997
(51) Int. Cl.: B29C 47/88

(54) **Procédé et dispositif pour le refroidissement interne de tuyaux en matière plastique**
Verfahren und Vorrichtung zum Innenkühlen von Kunststoffrohren
Method and apparatus for internal cooling of plastic pipes

(30) Priorité: 13.03.1996 BE 9600221
(43) Date de publication de la demande: 17.09.1997
(73) Titulaire: Reifenhäuser GmbH & Co. Maschinenfabrik, 53844 Troisdorf (DE)
(72) Inventeur: Pelzer, Rudolf, 52134 Herzogenrath (DE); Zeller, Manfred, 57072 Aachen (DE); Kuhlert, Karl, 52074 Aachen (DE)
(74) Mandataire: Overath, Philippe

(56) Documents cités:
- EP-A- 0 614 749
- WO-A-87/04113
- DE-A- 2 506 517
- DE-A- 2 523 975
- FR-A- 1 570 487
- US-A- 3 299 192
- US-A- 4 545 751
- US-A- 5 525 289

## Description

La présente invention se rapporte à un procédé et un dispositif pour refroidir la paroi interne d'un tuyau en matière plastique lors de son extrusion, en particulier de tuyaux à paroi épaisse de haute qualité.

La nécessité de coupler, lors de l'extrusion au refroidissement externe classique de tuyaux en plastique à paroi épaisse, un refroidissement interne efficace a déjà été soulignée à maintes reprises. La littérature spécialisée décrit une multitude de procédés et de dispositifs qui n'ont toutefois pas encore fourni à ce jour une solution applicable et satisfaisante sur les plans technique et économique. En général, les procédés suivant l'état de la technique basés sur l'utilisation d'air, eau, gaz tel que azote ou CO₂, ont buté sans cesse sur des problèmes divers: effets réfrigérants insuffisants, refroidissement asymétrique, solution inapplicable pour certaines applications, fortes altérations optiques ou gauchissements de la surface interne de la paroi des tubes.

Il est en effet impératif que l'on obtienne lors d'un refroidissement interne efficace d'un tuyau une atténuation maximale et une distribution favorable des contraintes dans la paroi du tube; en outre, il faudra un refroidissement rapide de la surface interne de la paroi, ainsi qu'un refroidissement rapide des couches internes de la paroi.

L'air atmosphérique peut faire figure d'agent ou gaz de refroidissement idéal. En effet, il est disponible partout, techniquement facile à mettre en oeuvre et inoffensif en cas de pannes ou de défectuosités. Toutefois, l'application d'un procédé basé sur l'air atmosphérique sur des tuyaux à parois épaisses n'a pas donné de satisfaction jusqu'à présent.

Ainsi la demande du brevet allemand DT-A-2523975 décrit un système suivant lequel un ventilateur fait circuler de l'air à l'intérieur d'un espace formé par la paroi d'un tuyau en matière plastique fabriqué par extrusion et une enceinte ménagée à l'intérieur de ce tuyau, dans laquelle circule de l'eau de refroidissement. Cette enceinte est alimentée par de l'eau venant de l'extérieur.

La circulation de l'air dans un circuit fermé à l'aide d'un ventilateur ne donne toutefois pas les conditions techniques impératives de vitesse et de débit nécessaires pour un refroidissement efficace.

Le brevet US 5.525.289 mentionne l'utilisation d'air frais comme moyen de refroidissement, mais ne discute pas la vitesse de l'air ni la quantité nécessaire pour obtenir une transmission thermique suffisante afin de pouvoir produire un tuyau à paroi épaisse de haute qualité.

Pour l'utilisation de l'air atmosphérique comme agent de refroidissement, il est indispensable de tenir compte des conditions techniques suivantes :
- les quantités d'air de refroidissement à mettre en oeuvre sont importantes, car la chaleur spécifique de l'air est relativement faible.
- le taux d'utilisation du potentiel de refroidissement du volume d'air amené doit être élevé; autrement dit, il faudrait que la majeure partie de ce volume participe à un échange intensif de chaleur avec la surface interne, très chaude, de la paroi du tube.
- l'échange de chaleur devrait être aussi intensif que possible, c'est-à-dire qu'il faut s'efforcer d'atteindre le coefficient de la transmission thermique (C.T.T.) le plus élevé possible.
- le parcours de refroidissement interne devrait être aussi long que possible afin de pouvoir extraire de la paroi du tube la quantité de chaleur nécessaire pour arriver à un refroidissement interne efficace, compte tenu de la mauvaise conduction thermique des matières plastiques et de la forte épaisseur de la paroi des tubes concernés.

L'invention a pour objet un procédé selon la revendication 1 et un dispositif selon la revendication 6 qui remplit les conditions requises, citées ci-dessus, pour obtenir un refroidissement interne efficace à l'air.

Suivant l'invention on réussit à produire un tuyau en matière plastique, à paroi épaisse de haute qualité, si on refroidit la paroi intérieure du tuyau produit à la sortie de l'extrudeuse à tête d'extrusion latérale (off-set), sur sa surface interne par de l'air atmosphérique continuellement renouvelé qui s'écoule à une vitesse superieure à 50m/s et avec un grand débit près de cette surface. De préférence, cet air qui s'échauffe par contact avec la surface de la paroi du tuyau est refroidi à l'aide d'un réfrigérant qui s'écoule en sens opposé. Le refroidissement de l'air pourra se faire, au moins sur une partie de la zone de refroidissement, sans contact direct entre l'air et le réfrigérant et sera réalisé de préférence à l'aide d'un liquide. L'eau sera dans la plupart des cas le liquide indiqué.

Lorsqu'on utilise l'eau on pourra suivant l'invention prévoir des perméabilités ou passages fins dans la paroi du circuit d'eau, de préférence dans la zone où l'air sera devenu le plus chaud (à partir du mi-parcours), de façon que l'eau rentre en contact avec l'air chaud et s'évapore. La chaleur nécessaire à l'évaporation de l'eau est retirée de l'air qui se refroidit donc et ainsi augmente sa capacité d'échange thermique.

On pourra réaliser ce type de refroidissement en glissant à l'intérieur du tuyau en formation, une structure à double paroi. L'écoulement de l'air se fera le long d'une espace annulaire situé entre la surface interne du tuyau et la paroi extérieure de la structure. L'écoulement du réfrigérant, par exemple de l'eau, pourra se faire par un circuit d'alimentation passant par la partie central de la structure pour ensuite passer à l'intérieure de la structure à double paroi. Ce circuit pourra être pourvu de porosités ou d'autres passages réduits pour l'eau prévus dans une partie de la paroi extérieure de la structure.

Avantageusement l'ensemble de la structure à double paroi permettant le refroidissement de l'air par l'eau peut se déplacer selon une direction axiale à l'intérieur du tuyau formé suivant un mouvement de va et vient. La longueur de ce mouvement d'oscillation peut atteindre plusieurs fois la longueur de l'ensemble de la structure de refroidissement. La fréquence d'oscillation peut atteindre plusieurs mouvements par seconde. De préférence cette fréquence sera de 0,1 à 2 oscillations par seconde. D'autres caractéristiques ressortirons des revendications et la description ci-après.

Avec un refroidissement de ce type on obtient:
- une amélioration sensible de la résistance à la pression interne ainsi qu'au fluage dans le temps des tuyaux à paroi épaisse communément utilisés comme conduites sous haute pression;
- une réduction de la valeur de retrait résiduel;
- une prévention d'excentricités internes ou de variations de l'épaisseur de la paroi qui dans les procédés connus résulte de la gravité agissant sur la masse de matière plastique qui reste en fusion assez longtemps à l'intérieur du tube;
- une prévention d'une dégradation oxydative des molécules de matière plastique de la face interne de la paroi du tube;
- un raccourcissement considérable des parcours de refroidissement, en particulier avantageux pour des installations à grand rendement dans des halls existants relativement courts.

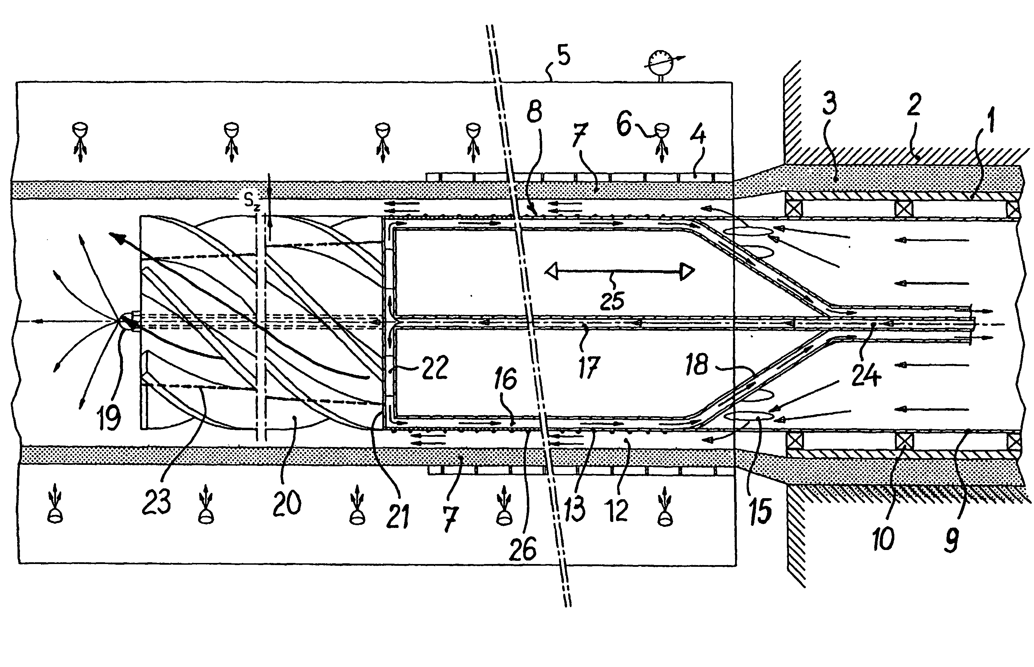

L'invention sera décrite ci-après plus en détail à l'aide d'un exemple de mise en application en se référant au dessin annexé, qui représente une coupe transversale schématique d'un dispositif suivant l'invention.

En se référant à la figure unique, elle montre la masse plastifiée 3 de matière plastique acheminée en continu par une extrudeuse à tête latérale (non représentée) et préformée par un moule à injection composé d'un mandrin creux 1 et d'une matrice 2 pour être transformée en tuyau 7.

Le tuyau 7 en formation est introduit dans un calibre 4 d'un bassin de calibrage sous dépression 5 dans lequel il reçoit son diamètre extérieur exact. La surface externe du tuyau 7 est alors aspergée intensivement d'eau de refroidissement à l'aide de moyens de pulvérisation 6 disposés les uns derrière les autres dans le sens longitudinal le long de la zone de refroidissement.

La surface externe du tuyau étant refroidie graduellement, le tuyau 7 est ainsi rendu indéformable. Ce refroidissement externe est poursuivi tout au long du bassin 5, donc également le long de la zone qui suit la partie de calibrage à l'aide du calibre 4.

La tête d'extrusion latérale (off-set) est équipée d'un mandrin creux 1 ou d'un mandrin présentant une ouverture centrale. Cette ouverture est nécessaire pour pouvoir insérer le dispositif de refroidissement interne dans le tuyau à refroidir par l'amont, c'est-à-dire du côté extrudeuse. Le dispositif de refroidissement interne comprend un corps cylindrique à double paroi 8, maintenu en place à l'intérieur du tuyau 7 en formation par une structure tubulaire 9 formant l'alimentation du (des) réfrigérant(s). A l'intérieur du mandrin 1, la structure 9 est supportée et centrée par des anneaux 10.

Près de l'extrudeuse, le corps cylindrique à double paroi 8 comporte une partie conique 18 dont la pointe est orientée vers l'extrudeuse et qui a pour but de guider l'air de refroidissement et de réduire la résistance d'écoulement de cette air.

Cet air de refroidissement, qui est fourni par une soufflerie à haute pression, entre par la structure tubulaire 9 et est guidé par la partie conique 18 vers la zone 12 en forme d'espace annulaire délimité par la surface interne du tuyau 7 et la paroi extérieure 13 du corps cylindrique 8. Dans cette espace annulaire 12 l'air de refroidissement s'écoule à grande vitesse, par exemple à des vitesses se situant entre 50 m/s et 120 m/s.

Pour le passage de l'air de la structure tubulaire 9 vers l'espace annulaire 12, on prévoit, à proximité de la partie conique 18, des ouvertures 15 de forme allongée réparties uniformément sur le contour de la structure 9.

Avantageusement, la paroi externe 13 du corps cylindrique 8 comporte des fils tendus 26, enroulés, dans le but de créer une turbulence du flux d'air dans l'espace annulaire 12 et donc d'augmenter l'échange thermique entre l'air de refroidissement et la surface interne du tuyau 7 en formation.

Sur son parcours, entre l'entrée de l'espace annulaire 12 jusqu'à l'extrémité 21 du corps cylindrique 8, l'air, qui s'écoule en turbulence, refroidit la paroi interne du tuyau 7 et s'échauffe. Plus l'air s'échauffe moins sera la différence de température entre l'air et la paroi à refroidir et plus faible sera l'échange thermique.

Pour éviter un échauffement trop important de l'air de refroidissement, le corps cylindrique 8 comporte un circuit de réfrigérant, tel que de l'eau, ayant une entrée 24 de l'eau par la structure tubulaire 9, qui se prolonge, en substance, dans la partie centrale 17 du corps 8 et qui s'étend jusqu'à l'extrémité 21 de ce corps, où le circuit forme une chambre 22.d'écoulement radial pour l'eau de refroidissement.

Cette eau de refroidissement continue son circuit par le passage 16, situé entre les parois double du corps cylindrique 8 pour retourner vers la partie conique 18 près de l'extrudeuse.

L'eau froide circulant dans ce circuit 24, 17, 22 et 16 s'écoule donc à contresens par rapport à l'air de refroidissement qui s'écoule dans l'espace annulaire 12 afin de refroidir l'air qui s'échauffe le long de son parcours dans la zone de refroidissement.

Au-delà de l'extrémité 21 du corps cylindrique 8, on peut avantageusement prévoir des ailettes 20 pour guider et orienter l'évacuation de l'air de refroidissement selon un tourbillon hélicoïdal. Ces ailettes 20 sont de préférence montées sur un tube conique 23 dont le diamètre diminue en s'écartant de l'extrémité 21 du corps cylindrique 8. Le diamètre extérieur des ailettes 20 correspond en substance au diamètre extérieur du corps 8 afin de maintenir un espace de refroidissement annulaire Sz constant.

Dans un but d'obtenir encore un échange de chaleur complémentaire, on prévoit à l'extrémité des ailettes 20 au moins une tête de vaporisation 19, qui peut être alimenté en direct par l'alimentation central 17 du circuit d'eau de refroidissement.

Cette vaporisation par la tête 19 humidifie l'air circulant dans la partie aval du corps cylindrique 8. Par le mouvement de tourbillon de cet air, provoqué par les ailettes 20, les gouttelettes d'eau sont projeté contre la surface interne, encore chaude, du tuyau 7.

L'eau qui vient en contact direct avec l'air de refroidissement échauffé, relativement sec, s'évapore au moins partiellement et la chaleur nécessaire à cette évaporation est retirée de l'air qui se refroidit . La différence de température entre l'air et la paroi du tuyau reste donc importante d'où un bon échange de chaleur complémentaire.

Outre l'évaporation directe des goulettes en contact avec l'air de refroidissement échauffé, venant de l'espace annulaire 12, on obtient également une évaporation des gouttelettes projetées contre la surface interne encore chaude du tuyau 7 en retirant encore des calories des zones internes de la paroi en matière plastique formant le tuyau 7.

En utilisant un circuit d'eau de refroidissement, on peut également prévoir des perméabilités où passages fins dans la paroi extérieure du corps cylindrique 8, de préférence répartis dans la partie 26 où l'air sera devenu le plus chaud, c'est à dire vers la mi-parcours de la zone de refroidissement du tuyau 7.

Suivant l'invention, la structure tubulaire 9 comprenant le corps cylindrique 8, le tube conique 23 et la tête de vaporisation 19 peut se déplacer selon une direction axiale à l'intérieur du tuyau 7 suivant un mouvement de va et vient (flèche 25) à l'aide d'un système classique, par exemple à l'aide d'une crémaillère telle que décrite dans la demande de brevet de la Demanderesse EP 0 614 749.
La longueur du mouvement d'oscillation peut atteindre en substance deux à trois fois la longueur de l'ensemble des éléments 9, 8, 23 et 19.

La fréquence d'oscillation peut atteindre plusieurs mouvements par seconde, elle variera suivant l'exemple de 0,1 à 2 mouvements par seconde et de préférence entre 0,1 et 0,5 mouvements par seconde.

Sur le plan thermodynamique, l'oscillation axiale se justifie parce qu'elle permet de dissiper par unité de temps une quantité de chaleur plus grande que lorsque le dispositif de refroidissement est fixe.

Ce phénomène s'explique par l'écart de température moyen plus grand qui existe entre l'air de refroidissement et la surface interne de la paroi du tuyau 7.

Il est clair que l'invention n'est pas limitée par l'exemple de mise en application décrite ci-dessus et que de nombreuses variantes peuvent y être apportées par l'homme du métier. Ainsi par exemple, il n'est pas indispensable de prévoir un contact entre l'eau et l'air. Pour des tuyaux de relativement faible diamètre, par exemple moins de 10 cm, ce contact air/eau est superflu lorsque la vitesse d'air est suffisamment grande.

## Revendications

1. Procédé pour refroidir la paroi intérieure d'un tuyau (7) en matière plastique à paroi épaisse de haute qualité, produit à la sortie d'une extrudeuse (1,2) à tête d'extrusion latérale, suivant lequel on fait circuler de l'air axialement le long de cette paroi intérieure, on refroidit cet air à l'aide d'un réfrigérant circulant dans un circuit (17,22,16) en sens opposé de l'air et on souffle de l'air continuellement renouvelé qui s'écoule à une vitesse supérieure à 50m/s et avec un grand débit sur la surface de cette paroi intérieure du tuyau en formation.

2. Procédé suivant la revendication 1, **caractérisé en ce que** le réfrigérant est un liquide, de préférence de l'eau.

3. Procédé suivant la revendication 1, **caractérisé en ce que** le réfrigérant circule dans un circuit (17,22,16) pouvant se déplacer à l'intérieur du tuyau (7) en formation suivant un mouvement de va et vient (25).

4. Procédé suivant la revendication 1, **caractérisé en ce que** le réfrigérant circule, au moins sur la moitié de la zone de refroidissement, dans un circuit en substance sans contact direct avec l'air.

5. Procédé suivant la revendication 1, **caractérisé en ce que** le réfrigérant circule, en substance à partir de la moitié de la zone de refroidissement, dans un circuit qui comporte des perméabilités de façon que le réfrigérant puisse se mélanger avec le gaz de refroidissement réchauffé.

6. Dispositif de refroidissement de la paroi intérieure d'un tuyau (7) en matière plastique à paroi épaisse de haute qualité lors de sa fabrication par extrusion à l'aide d'une tête d'extrusion latérale (1,2), comportant un corps (8) à double paroi, qui s'étend axialement à l'intérieur du tuyau (7) en formation, de manière à créer un espace annulaire (12) situé entre la surface intérieure de la paroi du tuyau (7) et la surface extérieure du corps (8), des moyens pour faire circuler un réfrigérant à l'intérieur de la paroi double du corps (8), une soufflerie pouvant faire circuler à une vitesse supérieure à 50m/s et avec un grand débit de l'air continuellement renouvelé dans l'espace annulaire (12) et des moyens (6) pouvant refroidir, en même temps que la surface intérieure, la surface extérieure de la paroi du tuyau.

7. Dispositif suivant la revendication 6, **caractérisé en ce que** le corps (8) à double paroi est maintenu en place par une structure tubulaire (9) qui s'étend au travers du mandrin (1) de l'extrudeuse à tête latérale et qui comporte des passages (15) pour le gaz de refroidissement et une canalisation (24) pour le réfrigérant.

8. Dispositif suivant la revendication 7 **caractérisé par** des moyens pouvant faire déplacer la structure tubulaire (9) et le corps à double paroi à l'intérieur du tuyau (7) suivant un mouvement de va et vient.

9. Dispositif suivant la revendication 7 ou 8 , **caractérisé en ce que** le corps (8) à double paroi présente une forme cylindrique qui se termine, du côté de la structure tubulaire (9), en forme de cône (18) et à l'extrémité (21), du côté opposé à la structure tubulaire (9), par une chambre (22) formant une espace d'écoulement radiale pour le réfrigérant.

10. Dispositif suivant une ou plusieurs des revendications 6 à 9, **caractérisé en ce que** de la paroi extérieure du corps (8) formant partie du circuit du réfrigérant comporte, sur une partie située entre la chambre (22) et en substance la moitié de la zone de refroidissement, des porosités ou passages fins pour un contact direct entre le réfrigérant et le gaz de refroidissement circulant dans l'espace annulaire (12) entre le corps (8) et la paroi intérieure du tuyau (7).

11. Dispositif suivant une ou plusieurs des revendications 6 à 10, **caractérisé en ce que** la surface externe de la paroi double du corps (8) comporte des fils tendus, enroulés, (26) provoquant des turbulences dans l'écoulement du gaz de refroidissement à l'intérieur de l'espace annulaire (zone 12).

12. Dispositif suivant la revendication 6, **caractérisé en ce que** au-delà de l'extrémité libre (21) du corps cylindrique (8) sont prévu des ailettes (20) pour guider et orienter l'écoulement du gaz de refroidissement selon un tourbillon hélicoïdal.

13. Dispositif suivant la revendication 12, **caractérisé en ce que** les ailettes (20) sont montées sur un tube conique (23) dont le diamètre diminue en s'écartant de l'extrémité (21) du corps (8).

14. Dispositif suivant la revendication 6, **caractérisé en ce que** au-delà de l'extrémité libre (21) du corps cylindrique (8) sont prévus des moyens de vaporisation (19) alimenté par un réfrigérant provenant de l'intérieur du corps cylindrique (8).

15. Dispositif suivant la revendication 14, **caractérisé en ce que** les moyens de vaporisation (19) sont alimentés par le circuit de réfrigérant (17) circulant dans le corps cylindrique (8) pour refroidir le gaz circulant dans l'espace annulaire (12) entre le corps (8) et la surface interne du tuyau (7) en formation.

## Patentansprüche

1. Verfahren zum Kühlen der Innwand eines dickwandigen Kunststoffrohrs (7) hoher Qualität, das am Austritt eines Extruders (1,2) mit seitlichem Extrusionskopf hergestellt wird, bei welchem man axial längs dieser Innenwand Luft strömen lässt, diese Luft mit Hilfe eines Kühlmittels kühlt, das in einem Kreis (17,22,16) in zur Luft entgegengesetzter Richtung umläuft, und man ständig erneuerte Luft bläst, die mit einer Geschwindigkeit von mehr als 50m/s und mit einem großen Durchsatz auf der Oberfläche der Innenwand des in Bildung begriffenen Rohrs strömt.

2. Verfahren nach Anspruch 1, **dadurch gekennzeichnet, dass** das Kühlmittel eine Flüssigkeit, vorzugsweise Wasser, ist.

3. Verfahren nach Anspruch 1, **dadurch gekennzeichnet, dass** das Kühlmittel in einem Kreis (17,22,16) umläuft, der sich im Inneren des in Bildung begriffenen Rohrs (7) in einer Hin- und Herbewegung (25) bewegen kann.

4. Verfahren nach Anspruch 1, **dadurch gekennzeichnet, dass** das Kühlmittel mindestens auf der Hälfte des Kühlbereichs in einem Kreis im wesentlichen ohne direkten Kontakt mit der Luft umläuft.

5. Verfahren nach Anspruch 1, **dadurch gekennzeichnet, dass** das Kühlmittel im wesentlichen von der Hälfte des Kühlbereichs an in einem Kreis umläuft, der Durchlässigkeiten aufweist, so dass das Kühlmittel sich mit dem erwärmten Kühlgas mischen kann.

6. Vorrichtung zum Kühlen der Innenwand eines dickwandigen Kunststoffrohrs (7) hoher Qualität bei seiner Herstellung durch Extrusion mit Hilfe eines seitlichen Extrusionskopfs (1,2), umfassend einen doppelwandigen Körper (8), der sich axial im Inneren des in Bildung begriffenen Rohrs (7) so erstreckt, dass ein ringförmiger Raum (12) zwischen der Innenfläche der Wand des Rohrs (7) und der Außenfläche des Körpers (8) geschaffen wird, Mittel zum Inumlaufbringen eines Kühlmittels im Inneren der doppelten Wand des Körpers (8), ein Gebläse, das in dem ringförmigen Raum (12) ständig erneuerte Luft mit einer Geschwindigkeit von mehr als 50m/s und mit einem hohen Durchsatz in Umlauf bringen kann, und Mittel (6), die gleichzeitig mit der Innenfläche die Außenfläche der Wand des Rohrs kühlen können.

7. Vorrichtung nach Anspruch 6, **dadurch gekennzeichnet, dass** der doppelwandige Körper (8) durch eine rohrförmige Struktur (9) gehalten wird, die sich durch den Dorn (1) des Extruders mit seitlichem Kopf erstreckt und Durchgänge (15) für das Kühlgas und eine Leitung (24) für das Kühlmittel besitzt.

8. Vorrichtung nach Anspruch 7, **gekennzeichnet durch** Mittel, die die rohrförmige Struktur (9) und den doppelwandigen Körper im Inneren des Rohrs (7) in einer Hin- und Herbewegung bewegen können.

9. Vorrichtung nach Anspruch 7 oder 8, **dadurch gekennzeichnet, dass** der doppelwandige Körper (8) eine zylindrische Form besitzt, die auf der Seite der rohrförmigen Struktur (9) in Form eines Kegels (18) und am Ende (21) auf der der rohrförmigen Struktur (9) entgegengesetzten Seite mit einer Kammer (22) endet, die einen radialen Strömungsraum für das Kühlmittel bildet.

10. Vorrichtung nach einem oder mehreren der Ansprüche 6 bis 9, **dadurch gekennzeichnet, dass** die Außenwand des Körpers (8), die einen Teil des Kreises des Kühlmittels bildet, auf einem zwischen der Kammer (22) und im wesentlichen der Hälfte des Kühlbereichs gelegenen Teil Porositäten oder enge Durchgänge für einen direkten Kontakt zwischen dem Kühlmittel und dem im ringförmigen Raum (12) zwischen dem Körper (8) und der Innenwand des Rohrs (7) strömenden Kühlgas aufweist.

11. Vorrichtung nach einem oder mehreren der Ansprüche 6 bis 10, **dadurch gekennzeichnet, dass** die Außenfläche der doppelten Wand des Körpers (8) gespannte, gewickelte Drähte (26) aufweist, die Turbulenzen in der Strömung des Kühlgases im Inneren des ringförmigen Raums (Zone 12) erzeugen.

12. Vorrichtung nach Anspruch 6, **dadurch gekennzeichnet, dass** jenseits des freien Endes (21) des zylindrischen Körpers (8) Rippen (20) zum Führen und Richten der Strömung des Kühlgases in einem schraubenförmigen Wirbel vorgesehen sind.

13. Vorrichtung nach Anspruch 12, **dadurch gekennzeichnet, dass** die Rippen (20) auf einem konischen Rohr (23) angebracht sind, dessen Durchmesser mit zunehmender Entfernung vom Ende (21) des Körpers (8) abnimmt.

14. Vorrichtung nach Anspruch 6, **dadurch gekennzeichnet, dass** jenseits des freien Endes (21) des zylindrischen Körpers (8) Verdampfungsmittel (19) vorgesehen sind, die durch ein aus dem Inneren des zylindrischen Körpers (8) kommendes Kühlmittel versorgt werden.

15. Vorrichtung nach Anspruch 14, **dadurch gekennzeichnet, dass** die Verdampfungsmittel (19) durch den im zylindrischen Körper (8) umlaufenden Kühlmittelkreis (17) versorgt werden, der zum Kühlen des Gases dient, das im ringförmigen Raum (12) zwischen dem Körper (8) und der Innenfläche des in Bildung begriffenen Rohrs (7) umläuft.

## Claims

1. Method of cooling the inside wall of a pipe (7) made of plastic material with thick walls of high quality, produced at the outlet of an extruder (1, 2) having a lateral extrusion head, according to which air is caused to travel axially along this inside wall, this air is cooled with the help of a refrigerant travelling in a circuit (17, 22, 16) in the opposite direction to the air and continuously renewed air is blown which flows at a speed exceeding 50 m/s and with a large flow over the surface of this inside wall of the pipe being formed.

2. Method according to claim 1, **characterized in that** the refrigerant is a liquid, preferably water.

3. Method according to claim 1, **characterized in that** the refrigerant travels in a circuit (17, 22, 16) which can move inside the pipe (7) being formed following a to-and-fro motion (25).

4. Method according to claim 1, **characterized in that** the refrigerant travels, at least over half of the cooling zone, in a circuit substantially having no direct contact with air.

5. Method according to claim 1, **characterized in that** the refrigerant travels, substantially from half of the cooling zone, in a circuit which contains permeabilities such that the refrigerant can mix with the heated cooling gas.

6. Device for cooling the inside wall of a pipe (7) made of plastic material having a thick wall of high quality during its manufacture by extrusion with the help of a lateral extrusion head (1, 2), containing a double-walled body (8), which extends axially inside the pipe (7) being formed, so as to create an annular space (12) situated between the interior surface of the wall of the pipe (7) and the exterior surface of the body (8), means of causing a refrigerant to travel inside the double wall of the body (8), a blower being able to travel at a speed exceeding 50 m/s and with a large flow of continuously renewed air in the annular space (12) and means (6) able to cool, at the same time as the interior surface, the exterior surface of the wall of the pipe.

7. Method according to claim 6, **characterized in that** the double-walled body (8) is kept in place by a tubular structure (9) which extends through the mandrel (1) of the extruder having a lateral head and which contains passages (15) for the cooling gas and a duct (24) for the refrigerant.

8. Device according to claim 7, **characterized by** means that are able to move the tubular structure (9) and the double-walled body inside the pipe (7) following a to-and-fro motion.

9. Device according to claim 7 or 8, **characterized in that** the double-walled body (8) is in the form of a cylinder which ends, on the side of the tubular structure (9), in the form of a cone (18) and, at the end (21) of the side opposite the tubular structure (9), in a chamber (22) forming a space for radial flow of the refrigerant.

10. Device according to one or more of claims 6 to 9, **characterized in that** the outside wall of the body (8) forming part of the refrigerant circuit contains, over a part situated between the chamber (22) and substantially half of the cooling zone, porosities or fine passages for a direct contact between the refrigerant and the cooling gas travelling in the annular space (12) between the body (8) and the inside wall of the pipe (7).

11. Device according to one or more of claims 6 to 10, **characterized in that** the external surface of the double wall of the body (8) contains stretched, coiled wires (26) causing turbulences in the flow of the cooling gas inside the annular space (zone 12).

12. Device according to claim 6, **characterized in that** beyond the free end (21) of the cylindrical body (8) blades (20) are provided to guide and orientate the flow of the cooling gas according to a helical vortex.

13. Device according to claim 12, **characterized in that** the blades (20) are mounted on a conical tube (23) the diameter of which decreases as it moves away from the extremity (21) of the body (8).

14. Device according to claim 6, **characterized in that** beyond the free end (21) of the cylindrical body (8) means of vaporization (19) are provided fed by a refrigerant coming from the interior of the cylindrical body (8).

15. Device according to claim 14, **characterized in that** the means of vaporization (19) are fed by the circuit of refrigerant (17) travelling in the cylindrical body (8) in order to cool the gas travelling in the annular space (12) between the body (8) and the internal surface of the pipe (7) being formed.
